# EUROPÄISCHE PATENTSCHRIFT

(11) **EP 0 818 229 B1**
(45) Veröffentlichungstag und Bekanntmachung des Hinweises auf die Patenterteilung: **27.04.2005**
(21) Anmeldenummer: 97109392.7
(22) Anmeldetag: 10.06.1997
(51) Int. Cl.: B01D 33/04, B01D 33/46

(54) **Begrenzungs- und Abstreifvorrichtung für eine Filtriervorrichtung zur Fest-/Flüssigtrennung, insbesondere Flachbettbandfilter**
Confining and scarping installation for a filtration apparatus for solid/liquid separation,especially flat bed-type belt filter
Installation pour le confinement et le raclage d'un filtre de séparation solide/liquide,en particulier d'un filtre à bande à lit plan

(30) Priorität: 10.06.1996 DE 29610171 U
(43) Veröffentlichungstag der Anmeldung: 14.01.1998
(73) Patentinhaber: Wilkes, Kurt, D-88400 Biberach (DE)
(72) Erfinder: Wilkes, Kurt, D-88400 Biberach (DE)
(74) Vertreter: König, Beate, Dipl.-Phys. Dr.

(56) Entgegenhaltungen:
- EP-A- 0 622 099
- DE-A- 1 947 546
- DE-A- 2 007 499
- DE-A- 3 243 683
- US-A- 3 197 030
- US-A- 4 950 399

## Beschreibung

Die Erfindung betrifft eine Begrenzungs- und Abstreifvorrichtung für eine Filtriervorrichtung zur Fest-/Flüssigtrennung, insbesondere Flachbettbandfilter.

Es ist eine Vielzahl von Flachbett-Bandfiltern bekannt, die z.B. nach dem Prinzip der Schwerkraftfilterung oder mit zusätzlichem Vakuum arbeiten. Der Einsatzbereich der Flachbett-Bandfilter umfaßt Anwendungen mit Durchsätzen bis etwa 1000 Liter/Minute. Definitionsgemäß ist das Filterbett flach und auf der Unterseite durch ein Filterband begrenzt, das auf einem Endlosträgerband läuft.

In der EP 0 622 099 A1 ist ein Bandfilter vom Flachbettyp beschrieben, das nach dem Prinzip der Schwerkraftfilterung arbeitet und bei dem das Filterband eine rein mechanische Bandführung sowie eine Bandreinigungsvorrichtung aufweist. Als seitliche Begrenzung des Filtrierraums sind starr gelagerte Seitenscheiben vorgesehen, deren Unterseite gebogen ausgebildet ist, derart, daß das Band zwischen den Umlenkwalzen eine Filtermulde bildet. Die Unterseiten der Seitenscheiben bilden eine Gleitfläche für das Band. Aufgrund der möglichen Reibung im unteren Muldenbereich zwischen Gleitfläche und Filterband kann es je nach Art und Form der anfallenden Feststoffpartikel und Flüssigkeiten zu einer erhöhten, mechanischen Beanspruchung des Filterbandes kommen.

Aus der CH 447 022 ist die Verwendung von Führungsrollen bekannt, die jeweils in Paaren an sich gegenüberliegenden Rändern des Gurtes angeordnet sind, und zwar entlang dem Förderweg, dem der Gurt folgen soll. Diese Rollen wirken mit an dem Band vorgesehenen nachgiebigen Schienen zusammen. Eine Abdichtfunktion ist nicht vorgesehen.

Die DE-A-20 07 499 offenbart eine Kratzvorrichtung zum Abschaben des Staubkuchens von Membranfiltern. Der Schaber dieser Vorrichtung weist eine messerscharfe, schartenfreie Schneide auf und ist in Eingriffsrichtung federnd gelagert. Im Bereich der Schneidenauflage ist das Membranfilter straff gespannt und stützt sich gegen eine nachgiebige Unterlage ab. Durch diese Maßnahme wird ein Nachgeben der Filterschicht, d.h. des Staubkuchens, erreicht und diese wird dann von der Filteroberfläche abgelöst.

Bei einem aus der DE-A-32 43 683 bekannten Abschabmechanismus ist ein Schaber mit einem schneidenförmigen Rand an seinem vorderen Ende vorgesehen. Der Schaber wird gegen die Oberfläche eines Bandes federbeaufschlagt gedrückt und zugleich in bezug auf die Bandoberfläche in und entgegen der Richtung des Bandlaufs bewegt, um das an dieser haftende Material abzuschaben.

Der Erfindung liegt die Aufgabe zugrunde, ein Bandfilter, insbesondere vom Flachbettyp, zu schaffen, bei dem ein hoher Filterwirkungsgrad bei zugleich günstigen Betriebskosten erreicht wird.

Diese Aufgabe ist erfindungsgemäß bei einem Bandfilter mit den Merkmalen des Anspruchs 1 gelöst. Vorteilhafte Weiterbildungen des erfindungsgemäßen Bandfilters sind Gegenstand der abhängigen Ansprüche. Durch die Erfindung ist bei Lösung der obigen Aufgabe auch eine Abstreifvorrichtung geschaffen worden, die Gegenstand des Anspruchs 13 ist. Vorteilhafte Weiterbildungen der Abstreifvorrichtung sind Gegenstand der abhängigen Ansprüche.

Ein erfindungsgemäßes Flachbett-Bandfilter ist vorzugsweise vom Schwerkraft-Typ und weist ein über Umlenkwalzen laufendes Endlosband und eine seitliche Begrenzung des Filterraums auf. Entlang des Bandobertrums an dessen seitlichem Rand, im unteren Bereich oder unterhalb der seitlichen Begrenzung ist eine Anzahl von Führungsrollen vorgesehen und jeweils auf der Bandinnenseite der Führungsrollen ist eine flexible langgestreckte Dichtlippe angeordnet.

Durch die erfindungsgemäß vorgesehenen Rollen wird verhindert, daß das Filterband mit der Unterseite der seitlichen Begrenzung, insbesondere den Unterkanten von Seitenscheiben, in Berührung kommt. Auf diese Weise wird eine mechanische Beschädigung des Filterbandes vermieden.

Darüber hinaus wird durch die Führungsrollen die Muldenbildung unterstützt.

Eine zuverlässige Abdichtung wird durch die Dichtlippe gewährleistet. Vorteilhaft ist die Dichtlippe an ihrem Bandauflageende jeweils auf der Außenseite durch eine sich längs erstreckende Anlage abgestützt. Dies ermöglicht die Verwendung eines flexiblen und gut dichtenden Materials und verhindert eventuelle Deformationen und Verschiebungen der Dichtlippe.

Insbesondere durch die Art der Montage der Dichtlippe, z.B. Lagerung jeweils in einem Langloch, kann erzielt werden, daß diese automatisch nachstellbar ist.

Zweckmäßig ist eine Ausgestaltung der Dichtlippe, bei der diese am Bandauflageende einen schräg nach unten und innen in den Filtrierraum geneigten Abschnitt aufweist. Dadurch liegt die Dichtlippe besser an und die Anlagefläche ist nicht auf die Unterkante beschränkt. Hinzu kommt, daß es nicht zu einem Haftenbleiben von Feststoffpartikeln im Übergangsbereich Filterband/Dichtlippe kommt. Bewirkt werden kann diese Dichtlippenausgestaltung durch die dann entsprechend angeordnete, oben erwähnte Anlage.

Die Dichtlippe ist bei einem vorteilhaften Ausführungsbeispiel mit den Endabschnitten am Rahmen befestigt. Dies führt zu einer stabilen Dichtungsanordnung.

Das erfindungsgemäße Bandfilter ist gewöhnlich mit einer Abstreiferleiste zum Abstreifen von am Band noch haftendem Filterkuchen versehen. Vorzugsweise ist diese Abstreiferleiste aus elastischem, besonders dünnem Flachmaterial, so daß die für eine gute Oberflächenreinigung notwendige Kantenschärfe immer erhalten bleibt. Die Halterung für die Abstreiferleiste ist beweglich gelagert, so daß auch anders beschaffene Abstreiferleisten, z.B. aus Kunststoff, in Verbindung mit dieser Halterung eingesetzt werden können. Sie ist dabei so ausgeformt, daß die Abstreiferleiste immer mit einer entsprechenden Vorspannung am Filterband anliegt.

Diese Abstreiferleiste verbessert die Bandreinigung einer herkömmlichen Abstreiferleiste beträchtlich. Dadurch ist der Wirkungsgrad der zugehörigen Filteranordnung deutlich verbessert. So kommt es bei Einsatz der erfindungsgemäßen Abstreiferleiste nicht dazu, daß Späne zwischen die Abstreiferleiste und das Band gelangen.

Wie offensichtlich ist, eignet sich die erfindungsgemäße Abstreiferleiste selbstverständlich ebenfalls für alle anderen Filtertypen als Flachbettfilter, beispielsweise für Muldenbandfilter. Diese sind demgemäß dann mit einer Abstreiferleiste aus scharfkantigem Federstahl versehen, die durch das Eigengewicht der Abstreifvorrichtung am Filterband an der austragseitigen Umlenkwalze anliegt. Dabei ist die Halterung beweglich gelagert und ausgeformt, so daß die Abstreiferleiste immer mit einer entsprechenden Vorspannung am Filterband anliegt.

Vorteilhaft ist bei der erfindungsgemäßen Abstreiferleiste die Druckbeaufschlagung. Hierdurch kommt es zu einer optimal definierten Anlage der Abstreiferleiste am zu säubernden Filterband.

Es kann eine Bandführung vorteilhaft so ausgestaltet sein, daß zwischen den Umlenkwalzen eine Führung unterhalb des Bandes sowie entsprechende Führungsmittel auf der Bandunterseite vorgesehen sind. Diese Maßnahmen sind unkompliziert und können einfach ausgeführt werden. Es entfallen aufwendige Bandsteuerungen o.ä., wie sie im Bereich der Bandfilterung bekannt sind. Für größere Filtereinheiten können auch zwischen den Umlenkwalzen eine Führung oberhalb des Bandes und entsprechende Führungsmittel vorgesehen sein.

Mehr im einzelnen ist z.B. vorteilhaft eine Nut als Führung vorgesehen. Es können sich auch eine oder mehrere Nuten in den Umlenkwalzen befinden. Auf der Bandunterseite sind entsprechend Vorsprünge wie z.B. Führungsbolzen angebracht.

Ansonsten ist bei einem Bandfilter, wie es hier vorgesehen ist, zweckmäßig das Filterband ein flexibles, zugfestes poröses Band aus einem korrosionsfesten Werkstoff. Bei diesem kann es sich z.B. um Edelstahl, Kunststoff oder einem alternativen Werkstoff handeln.

Wird die Oberseite der Seitenscheibe gebogen in der Art ausgebildet, daß das Band zwischen den Umlenkwalzen eine Filtermulde bildet, kann die Filterleistung wirksam ohne Einsatz besonderer Vorrichtungen erhöht werden. Dabei ergibt sich indessen noch nicht die Notwendigkeit von Mitnehmern oder dergleichen zur Unterstützung des Austrags von Feststoffen aus der Filtermulde.

Die Erfindung wird vorteilhaft weiter anhand eines bevorzugten Ausführungsbeispiels und der Zeichnung beschrieben. In der Zeichnung zeigen:
- Fig. 1: eine schematische Seitenansicht eines Flachbett-Bandfilters, das mit einer Dichtlippenanordnung gemäß der Erfindung ausgestattet ist,
- Fig. 2: eine schematische Ansicht dieses Flachbett-Bandfilters in Richtung des Einlaufs gemäß Pfeilen A-A in Fig. 1,
- Fig. 3: eine Seitenansicht der Dichtlippenanordnung, gesehen vom Filtrierraum,
- Fig. 4: eine vergrößerte Schnittansicht der Dichtlippenanordnung gemäß Pfeilen B-B in Fig. 3 und
- Fig. 5: eine schematische perspektivische Ansicht einer erfindungsgemäßen Abstreiferanordnung.

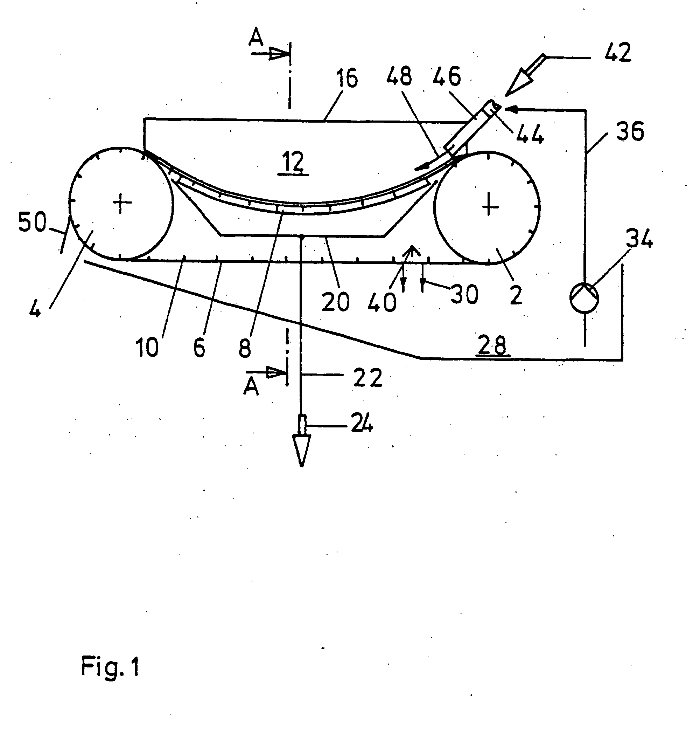

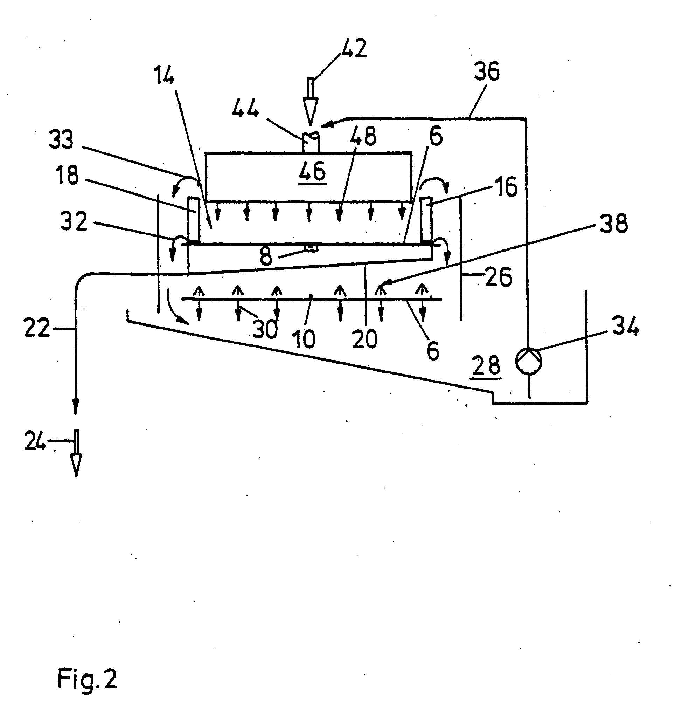

Es wird im folgenden zunächst auf Fig. 1 und Fig. 2 Bezug genommen. Ein erfindungsgemäßes Flachbett-Bandfilter umfaßt zwei Umlenkwalzen 2, 4, auf denen ein Endlosfilterband 6 umläuft. Im gezeigten Ausführungsbeispiel ist das Endlosband 6 ein flexibles, zugfestes, korrosionsfeste Gittergeflecht bzw. -gewebe aus Edelstahl. Für das Band 6 ist eine Führung 8 vorgesehen, die sich zwischen den Umlenkwalzen auf der Bandinnenseite und in Form einer Nut in den Umlenkwalzen befindet. Auf der Bandunterseite sind entsprechende Führungsbolzen 10 angebracht. Das Obertrum des Filterbandes ist zwischen den Umlenkwalzen 2, 4 muldenartig abgesenkt, so daß sich eine flache Filtermulde 12 bildet. Durch diese erhält der Filtrierraum 14 eine größere Tiefe und der Filterwirkungsgrad ist erhöht. Seitlich ist der Filtrierraum, d.h. das Filterbett, durch starr gelagerte Seitenscheiben 16, 18 begrenzt. Diese sind mit einer Rollenführung und Dichtlippen ausgestattet, wie später noch im einzelnen beschrieben wird.

Unterhalb des Obertrums des Filterbandes 6 befindet sich ein Leitblech bzw. eine Auffangeinrichtung 20 zum Sammeln und Abführen des Filtrats. Der Abfluß und die Weiterleitung des Filtrats sind durch Pfeile 22, 24 angedeutet. Eine seitliche Abdeckung 26 dient als Spritzschutz und eine Wanne 28 ist zur Aufnahme der verschmutzten Filterbandspülflüssigkeit vorgesehen. Die Wanne 28 sammelt verschmutzte Reinigungsflüssigkeit von der Filterbandreinigung sowie eventuell aus dem Filtrierraum überlaufende verschmutzte Flüssigkeit und/oder Leckflüssigkeit aus dem Filtrierraum. Sie kann ferner ggf. aus der Auffangeinrichtung 20 überlaufendes Filtrat aufnehmen. Dies ist mittels Pfeilen 30, 32, 33 angedeutet. Eine in der Wanne 28 angeordnete Pumpe 34 fördert dort befindliche Reinigungsflüssigkeit über eine Leitung 36 in den Filtrierraum 14.

Oberhalb des Untertrums des Filterbandes 6 befindet sich eine Reinigungsvorrichtung 38 in Form mehrerer Reinigungsdüsen 40, die das Filterband 6 mit Fluid von innen nach außen durchdüsen, wobei Feststoffe und/oder ablaufende, verschmutzte Reinigungsflüssigkeit in die Wanne 28 eingeleitet werden. Das Band wird auf diese Weise von noch haftenden Feststoffpartikeln freigespült.

Für die Zuführung 42 der Fest/Flüssigkeit-Mischung ist ein Zuleitungsrohr 44 vorgesehen, daß in eine Verteilereinrichtung 46 mündet, die sich im wesentlichen über die gesamte Breite des Filterbetts erstreckt. Die Verteilereinrichtung 46 ist kastenförmig ausgeführt und in Richtung des Bandlaufs, d.h. schräg nach unten geneigt angeordnet. Der Auslauf der Fest/Flüssigkeit-Mischung ist durch Pfeile 48 angedeutet. Im unteren Umfangsbereich der auslaufseitigen Umlaufwalze 4 ist ein Abstreifer 50 dargestellt, der das Band 6 auf der Schmutzseite von Filterkuchen befreit und der später noch mehr im einzelnen beschrieben wird.

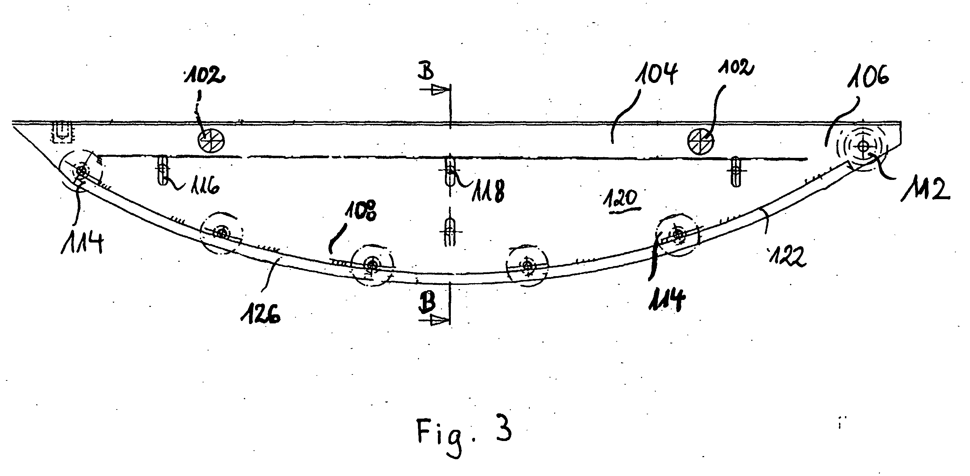

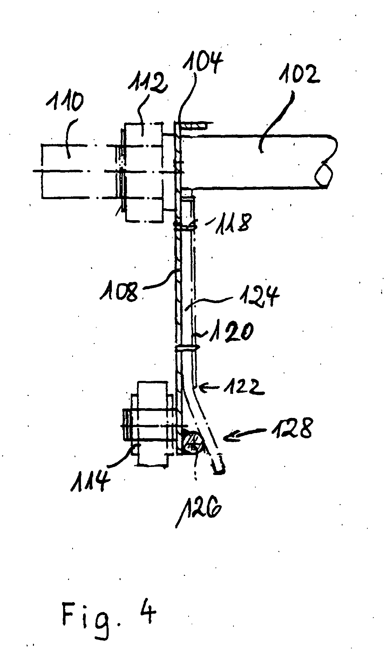

Es wird nun die Rollenführung der Seitenscheiben 16, 18 mit Dichtlippe anhand von Fig. 3 und Fig. 4 beschrieben. Die Anordnung ist mittels sich quer über die Breite des Bandfilters erstreckende Bolzen 102 an einer mit ihrem unteren Ende gebogen ausgebildeten Seitenplatte 104 befestigt, die hier für die Seitenscheiben steht. Die Seitenplatte 104 ist an ihrem Ende 106 jeweils über Halterungsbolzen 110 am nicht gezeigten Rahmen des Bandfilters befestigt, wobei die Halterungsbolzen 110 mittels Spannrollen 112 am Band anliegen. An der Seitenplatte 104 sitzt in Langlöchern 116 durch Bolzen 118 mit Spiel und mit Abstand gehaltert eine Gegenplatte 120. Die Gegenplatte 120 erstreckt sich zwischen beiden Enden 106 der Seitenplatte 104. Die Unterkanten von Seitenplatte 104 und Gegenplatte 120 sind gebogen ausgebildet. Zu sehen in Fig. 3 ist die Unterkante 122 der Gegenplatte 120.

Die Seitenplatte 104 trägt in Abständen angeordnete Führungsrollen 114, mittels denen die Seitenscheiben 16, 18 am Filterband 6 anliegen, das hier zur Vereinfachung der Darstellung nicht eingezeichnet ist. Mittels der Führungsrollen 114 wird die Filtermulde gebildet, d.h. die Anordnung der Führungsrollen 114 bestimmt die Form der Filtermulde. Da sich die Führungsrollen 114 mit der Bandbewegung drehen, ist die Bandbelastung durch die Führungsrollen denkbar gering.

Aufgrund der über die Führungsrollen 114 optimierten Muldenbildung ist die Filterdurchsatzleistung pro Fläche und Zeit eines so ausgestatteten Filters trotz der sehr niedrigen Bauhöhe aufgrund der tieferen Mulde im Vergleich zu anderen herkömmlichen Flachbettfiltern größer.

Zwischen der Seitenplatte 104 und der Gegenplatte 120 ist eine flexible Dichtlippe 124 angeordnet. Da sich vor dem unteren Randbereich der Seitenplatte 108 ein Rohrbügel 126 erstreckt, der ggf. auch aus Hartgummi oder Kunststoff sein kann, ist der untere Bereich 128 der Dichtlippe einwärts abgebogen, so daß sie in stärkere Anlage an das Filterband gelangt und der Eingriff der normalerweise weniger tief reichenden Führungsrollen 114 erst mit Verschleiß bzw. geringer werdendem Druck der Dichtlippe 124 in Funktion tritt. In der Darstellung der Fig. 3 ist die Dichtlippe 124 aus Gründen der Übersichtlichkeit fortgelassen. Die Dichtlippe 124 dichtet den Filtrierraum 12 seitlich ab. Die Seitenplatte 104 und die Führungsrollen 114 kommen so nicht mit dem Filtermedium in Berührung.

Aufgrund der Langloch-Anbringung ist die Dichtlippe 124 mit einer automatischen Nachjustierung ausgestattet. Wenn sie durch Verschleiß an Höhe verliert, rutscht sie aufgrund ihres Eigengewichts automatisch nach unten nach, so daß stets eine zuverlässige Abdichtung gewährleistet ist. Eine separate Justiereinrichtung ist daher nicht erforderlich.

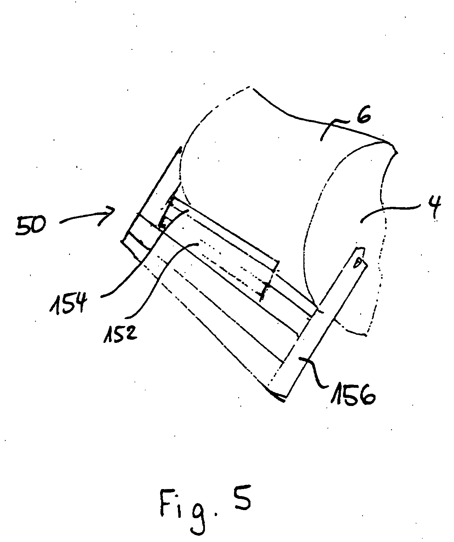

Fig. 5 zeigt eine Ausgestaltung des Abstreifers 50, der für das vorliegende Bandfilter, ebenso aber auch für andere Filtertypen geeignet ist. Gezeigt ist die Umlenkwalze 4 und eine Halterung 152 aus beispielsweise Kunststoff oder Alternativmaterialien, die an einem Führungshebel 156 befestigt ist. An der Halterung 152 ist eine Abstreiferleiste 154 parallel und näher zum Band 6 hin angebracht. Diese Abstreiferleiste ist im gezeigten Ausführungsbeispiel aus sehr dünnem Federbandstahl und kann aufgrund der flexibel ausgeführten Anbringung abgebogen bzw. geschwenkt werden. Die Abstreiferleiste 154 liegt durch das Eigengewicht des Abstreifers 50 an der Umlenkwalze 4 an und hat aufgrund der be- sonders glatten und schmalen Kante des Federbandstahls eine besonders gute Reinigungswirkung, zumal sie auch im Langzeiteinsatz immer scharfkantig bleibt.

## Patentansprüche

1. Bandfilter vom Flachbettyp, mit einem über Umlenkwalzen laufenden Endlosband (6) und einer seitlichen Begrenzung des Filtrierraums (12),
**dadurch gekennzeichnet, daß**
entlang des Bandobertrums an dessen seitlichem Rand, im unteren Bereich oder unterhalb der seitlichen Begrenzung (16, 18; 108) eine Anzahl von Führungsrollen (114) vorgesehen ist und
jeweils auf der Bandinnenseite der Führungsrollen (114) eine flexible langgestreckte Dichtlippe (124) angeordnet ist.

2. Bandfilter nach Anspruch 1,
**dadurch gekennzeichnet, daß**
die Dichtlippe (124) an ihrem Bandauflageende jeweils auf der Außenseite durch eine sich längs erstreckende Anlage (126) abgestützt ist.

3. Bandfilter nach Anspruch 1 oder 2,
**dadurch gekennzeichnet, daß**
die Dichtlippe (124) automatisch nachstellbar ist.

4. Bandfilter nach einem der Ansprüche 1 bis 3,
**dadurch gekennzeichnet, daß**
die Dichtlippe (124) in einem oder mehreren Langlöchern (116) geführt angebracht ist.

5. Bandfilter nach Anspruch 4,
**dadurch gekennzeichnet, daß**
die Dichtlippe (124) am Bandauflageende einen nach schräg nach unten und innen in den Filtrierraum geneigten Abschnitt (128) aufweist.

6. Bandfilter nach einem der Ansprüche 1 bis 5, wobei das Bandfilter einen Rahmen aufweist,
**dadurch gekenhzeichnet, daß**
die Dichtlippe (124) mit den Endabschnitten am Rahmen befestigt ist.

7. Bandfilter nach einem der Ansprüche 6,
**dadurch gekennzeichnet, daß** mindestens
eine Nut als Führung auf jeder Umlenkwalze vorgesehen ist und auf der Bandunterseite Vorsprünge wie z.B. Führungsbolzen (10) angebracht sind.

8. Bandfilter nach Anspruch 7,
**dadurch gekennzeichnet, daß** zwischen den
Umlenkwalzen (2, 4) eine Führung (8) unterhalb des Bandes sowie entsprechende Führungsmittel (10) auf der Bandunterseite vorgesehen sind.

9. Bandfilter nach Anspruch 8,
**dadurch gekennzeichnet, daß** zwischen den
Umlenkwalzen eine Führung oberhalb des Bandes und entsprechende Führungsmittel vorgesehen sind.

10. Bandfilter nach einem der Ansprüche 1 bis 9,
**dadurch gekennzeichnet, daß**
eine Halterung (152) mit einer Aufnahme für eine Abstreiferleiste für ein Filterband (6) vorgesehen ist,
wobei die Halterung (152) so ausgeformt ist, daß die Abstreiferleiste (154) immer mit einer entsprechenden Vorspannung am Filterband (6) anliegt.

11. Bandfilter nach Anspruch 10,
**dadurch gekennzeichnet, daß**
die Abstreiferleiste (154) unter Druckbeaufschlagung in bezug auf die Halterung (152) schwenkbar ist.

12. Bandfilter nach Anspruch 10 oder 11,
**dadurch gekennzeichnet, daß**
die Abstreiferleiste (154) aus sehr dünnem scharfkantigen Federstahl ist.

13. Abstreifvorrichtung (50) für Bandfilter mit einem über Umlenkwalzen (4) laufenden Filterband (6), mit einer drehbar gelagerten Halterung (152) für eine Abstreiferleiste (154),
**dadurch gekennzeichnet, daß**
die Abstreiferleiste (154) aus scharfkantigem Federstahl ist und nur durch das Eigengewicht der Abstreifvorrichtung (50) am Filterband (6) an der austragseitigen Umlenkwalze (4) anliegt,
die Halterung (152) flexibel ausgebildet ist, to daß die Abstreiferleiste (154) immer mit einer entsprechenden Vorspannung am Filterband (6) anliegt.

14. Abstreifvorrichtung nach Anspruch 13,
**dadurch gekennzeichnet, daß** die Halterung (152) flexibel ausgebildet ist, so daß die an der Halterung (152) ausgebrachte Abstreiferleiste abbiegbar oder verdrehbar ist.

15. Abstreifvorrichtung nach Anspruch 13 oder 14,
**dadurch gekennzeichnet, daß**
die Abstreifleiste (154) aus sehr dünnem Federbandstahl ist.

## Claims

1. Belt filter of the flat bed type having a continuous belt (6), which runs over deflecting rollers, and where the filtering chamber (12) is defined laterally,
**characterised in that**
a plurality of guide rollers (114) is provided along the belt upper run on its lateral edge in the lower region or below the lateral delimitation (16, 18; 108) and
in each case a flexible longitudinally extending sealing lip (124) is disposed on the belt inner side of the guide rollers (114).

2. Belt filter as claimed in claim 1,
**characterised in that**
the sealing lip (124) is supported on its belt-contacting end in each case on the outer side by means of a support (126) which extends longitudinally.

3. Belt filter as claimed in claim 1 or 2,
**characterised in that**
the sealing lip (124) can be re-adjusted automatically.

4. Belt filter as claimed in any one of claims 1 to 3,
**characterised in that**
the sealing lip (124) is attached in such a manner as to be guided in one or a plurality of elongated holes (116).

5. Belt filter as claimed in claim 4,
**characterised in that**
the sealing lip (124) comprises at the belt-contacting end a portion (128) which is inclined diagonally downwards and inwardly into the filtering chamber.

6. Belt filter as claimed in any one of claims 1 to 5, wherein the belt filter comprises a frame,
**characterised in that**
the sealing lip (124) is attached with the end portions to the frame.

7. Belt filter as claimed in any one of claims 1 to 6,
**characterised in that**
at least one groove is provided as a guide on each deflecting roller and projections, such as for example guide pins (10), are attached to the belt lower side.

8. Belt filter as claimed in claim 7,
**characterised in that**
between the deflecting rollers (2,4) are provided a guide (8) below the belt and corresponding guide means (10) on the belt lower side.

9. Belt filter as claimed in claim 8,
**characterised in that**
between the deflecting rollers are provided a guide above the belt and corresponding guide means.

10. Belt filter as claimed in any one of claims 1 to 9,
**characterised in that**
a holding device (152) having a receiving device for a stripping strip is provided for a filter belt (6),
wherein the holding device (152) is formed in such a manner that the stripping strip (154) always lies against the filter belt (6) with a corresponding pre-stressing.

11. Belt filter as claimed in claim 10,
**characterised in that**
under the influence of pressure the stripping strip (154) can be pivoted with respect to the holding device (152).

12. Belt filter as claimed in claim 10 or 11,
**characterised in that**
the stripping strip (154) is made from extremely thin, sharp-edged resilient steel.

13. Stripping device (50) for belt filters having a filter belt (6) which runs over deflecting rollers (4), having a rotatably mounted holding device (152) for a stripping strip (154),
**characterised in that**
the stripping strip (154) is made from sharp-edged resilient steel and only by reason of the intrinsic weight of the stripping device (50) lies against the filter belt (6) on the discharge-side deflecting roller (4),
the holding device (152) is designed in a flexible manner so that the stripping strip (154) always lies against the filter belt (6) with a corresponding pre-stressing.

14. Stripping device as claimed in claim 13,
**characterised in that**
the holding device (152) is designed in a flexible manner so that the stripping strip attached to the holding device (152) can be bent or pivoted.

15. Stripping device as claimed in claim 13 or 14,
**characterised in that**
the stripping strip (154) is made from extremely thin resilient steel strip.

## Revendications

1. Filtre à bande du type à lit plat, comprenant une bande sans fin (6) circulant sur des cylindres de renvoi et une délimitation latérale de l'espace de filtration (12), **caractérisé en ce que** :
- le long du bord latéral du brin supérieur, dans la zone inférieure ou en dessous de la limitation latérale (16, 18 ; 108) est prévu un certain nombre de rouleaux de guidage (114) et
- sur le côté, situé vers l'intérieur de la bande, de chaque rouleau de guidage (114) est disposée une lèvre d'étanchéité (124) allongée et flexible.

2. Filtre à bande selon la revendication 1, **caractérisé en ce que** chaque lèvre d'étanchéité (124), à son extrémité en appui sur la bande, est soutenue du côté de sa face externe par un appui (126) disposé en long.

3. Filtre à bande selon la revendication 1 ou 2, **caractérisé en ce que** la lèvre d'étanchéité (124) se règle automatiquement.

4. Filtre à bande selon une des revendications 1 à 3, **caractérisé en ce que** la lèvre d'étanchéité (124) est montée avec guidage dans un ou plusieurs trous oblongs (116).

5. Filtre à bande selon la revendication 4, **caractérisé en ce que** la lèvre d'étanchéité (124), à son extrémité en appui sur la bande, présente une partie (128) inclinée vers le bas et dirigée vers l'intérieur de l'espace de filtration.

6. Filtre à bande selon une des revendications 1 à 5, ce filtre à bande comportant un châssis, **caractérisé en ce que** la lèvre d'étanchéité (124) est fixée par ses extrémités au châssis.

7. Filtre à bande selon une des revendications 1 à 6, **caractérisé en ce qu'**il est prévu pour le guidage au moins une rainure sur chaque cylindre de renvoi et sur la face inférieure de la bande des saillies telles que par exemple des tétons de guidage (10).

8. Filtre à bande selon la revendication 7, **caractérisé en ce qu'**entre les cylindres de renvoi (2, 4) il est prévu un guidage en dessous de la bande ainsi que des moyens de guidage (10) correspondants sur la face inférieure de la bande.

9. Filtre à bande selon la revendication 8, **caractérisé en ce qu'**entre les cylindres de renvoi il est prévu un guidage au-dessus de la bande et des moyens de guidage correspondants.

10. Filtre à bande selon une des revendications 1 à 9, **caractérisé en ce qu'**il est prévu un support (152) pour accueillir une lame de raclage de la bande filtrante (6) et ce support (152) est formé de manière que la lame de raclage (154) soit toujours appliquée sur la bande filtrante (6) avec une précontrainte correspondante.

11. Filtre à bande selon la revendication 10, **caractérisé en ce que** la lame de raclage (154) peut basculer sous l'action d'une pression par rapport au support (152).

12. Filtre à bande selon la revendication 10 ou 11, **caractérisé en ce que** la lame de raclage (154) est une lame mince à bord aigu en acier à ressort.

13. Dispositif de raclage (50) pour filtre à bande comportant une bande filtrante (6) circulant sur des rouleaux de renvoi (4) ainsi qu'un support rotatif (152) pour une lame de raclage (154), **caractérisé en ce que** la lame de raclage (154) est une lame à bord aigu en acier à ressort, qu'elle est appliquée uniquement par le poids propre du dispositif de raclage (50) sur la bande filtrante (6) au cylindre de renvoi (4) situé du côté sortie, que le support (152) est flexible de sorte que la lame de raclage (154) est toujours appliquée sur la bande filtrante (6) avec une précontrainte correspondante.

14. Dispositif de raclage selon la revendication 13, **caractérisé en ce que** le support (152) est flexible de sorte que la lame de raclage prévue sur le support (152) peut être pliée ou gauchie.

15. Dispositif de raclage selon la revendication 13 ou 14, **caractérisé en ce que** la lame de raclage (154) est faite d'une bande d'acier à ressort très mince.
